(19) Europäisches Patentamt
European Patent Office
Office européen des brevets

(11) EP 4 648 370 A1

(12) EUROPEAN PATENT APPLICATION

(43) Date of publication:
**12.11.2025 Bulletin 2025/46**

(21) Application number: **25174910.7**

(22) Date of filing: **07.05.2025**

(51) International Patent Classification (IPC):
***H04L 27/26*** *(2006.01)*

(52) Cooperative Patent Classification (CPC):
**H04L 27/2621**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.05.2024 US 202463644190 P**
**09.07.2024 US 202463669053 P**
**14.10.2024 US 202418915195**

(71) Applicant: **Avago Technologies International Sales Pte. Limited**
**Singapore 768923 (SG)**

(72) Inventors:
- **Pulikkoonattu, Rethnakaran**
  **Irvine, 92618 (US)**
- **Montreuil, Leo**
  **Irvine, 92618 (US)**
- **Porat, Ron**
  **Irvine, 92618 (US)**
- **Puducheri Sundaravaradhan, Srinath**
  **Irvine, 92618 (US)**
- **Nassiri Toussi, Karim**
  **Irvine, 92618 (US)**

(74) Representative: **Dilg, Haeusler, Schindelmann Patentanwaltsgesellschaft mbH**
**Leonrodstraße 58**
**80636 München (DE)**

# (54) SYSTEMS FOR AND METHODS OF FREQUENCY DOMAIN DUPLICATE MODE TRANSMISSION USING ORTHOGONAL CODES

(57) A system for providing duplicate mode orthogonal frequency-division multiple access transmissions while maintaining a relatively low peak-to-average power ratio. Data to be transmitted is converted to symbols which are duplicated onto a number of resource units. Phase shifts are applied to a number of symbols prior to conversion to the time domain for transmission. The phase shifts can be removed at the receiver prior to decoding the signal to the transmitted data.

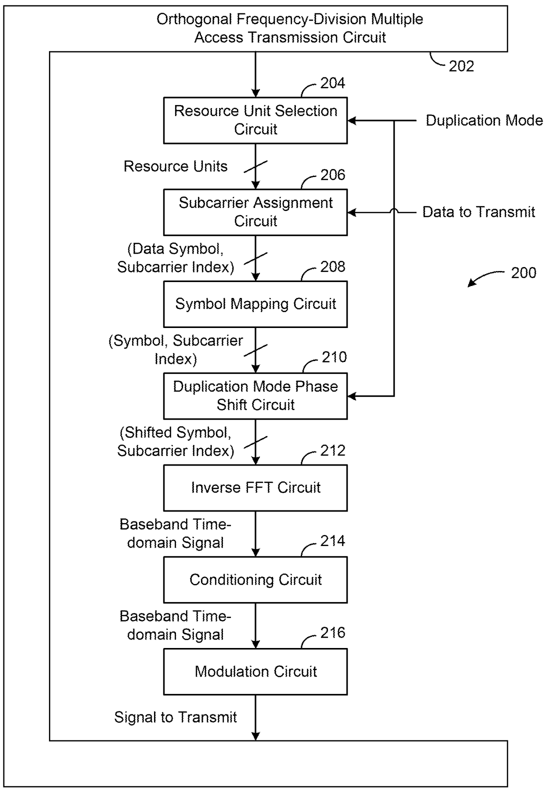


FIG. 2A

EP 4 648 370 A1

## Description

CROSS-REFERENCE TO RELATED APPLICATIONS

This application claims the benefit of U.S. Provisional Patent Application No. 63/644,190 filed May 8, 2024, this application also claims the benefit of U.S. Provisional Patent Application No. 63/669,053 filed July 9, 2024, the entire contents of both are incorporated herein by reference.

BACKGROUND

The present disclosure relates to increasing communication reliability (e.g., in long range communication) by sending duplicate transmission of the data on different resource units of an orthogonal frequency-domain multiple access (OFDMA) signal.

In certain applications, the received signal in a OFDMA communications network can deteriorate due to a channel impairment (e.g., noise) or a long travel distance. To ameliorate data loss and/or the need for retransmissions, the same data or symbols can be transmitted on multiple resource units (RU) of a OFDMA signal spectrum. For example, an RU52 sub-channel in an OFDMA frame (e.g., that can be used in Wi-Fi networks) can be duplicated four times or an RU26 sub-channel in an OFDMA frame can be duplicated eight times. Duplicating the symbols for transmission can have a deleterious effect on signal characteristics by causing crests of the time domain symbols to add constructively, thereby leading to increased peak-to-average power ratio (PAPR). Larger PAPR requires a larger power backoff for the signal peaks and thus can restrict the maximum power of the transmission.

BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.

FIG. 1A is a block diagram depicting a network environment including one or more access points in communication with one or more devices or stations, according to some embodiments.

FIG. 1B is a block diagrams depicting computing devices useful in connection with the methods and systems described herein, according to some embodiments.

FIG. 1C is another block diagrams depicting computing devices useful in connection with the methods and systems described herein, according to some embodiments.

FIG. 1D is a plot of the cumulative distribution function of the peak-to-average power ratio of transmissions using different resource unit assignments, according to some embodiments.

FIG. 2A is a block diagram of a system for transmitting an orthogonal frequency-division multiple access signal using a duplication mode phase shift circuit, according to some embodiments.

FIG. 2B is a block diagram of a system for receiving an orthogonal frequency-division multiple access signal using a duplication mode phase shift circuit, according to some embodiments.

FIG. 3A is a block diagram of the operations of the duplication mode phase shift circuit of FIG. 2A, according to some embodiments.

FIG. 3B is a block diagram of the operations of the duplication mode phase shift circuit of FIG. 2B, according to some embodiments.

FIG. 4A is a flow diagram for transmitting an orthogonal frequency-division multiple access signal using phase shifts, according to some embodiments.

FIG. 4B is a flow diagram for adding phase shifts to the orthogonal frequency-division multiple access signal using matrix stacks, according to some embodiments.

FIG. 5 is a flow diagram for receiving an orthogonal frequency-division multiple access signal with added phase shifts, according to some embodiments.

DETAILED DESCRIPTION

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a™, IEEE 802.11b™, IEEE 802.11g™, IEEE P802.11n™; IEEE P802.11ac™; and IEEE P802.11be™ through IEEE P802.11bn™ standards. Although this disclosure can reference aspects of these standard(s), the disclosure is in no way limited by these standard(s).

Phase shifts may be applied to the symbols of specific subcarriers in a duplicate transmission in some embodiments. The phase shifts may cause the symbols to no longer add constructively in the time domain and lead to an advantageously decreased PAPR. Selection of the phase shift based on certain Hadamard matrices may lead to a PAPR similar to that of non-duplicate mode transmissions in some embodiments.

Some embodiments relate to a system for transmitting long range communication by sending duplicate symbol transmissions using a number of resource units. The system includes one or more circuits configured to perform operations. The operations include mapping a number of data symbols to a magnitude and a phase to generate a number of symbols. The operations also include applying a first set of respective phase shifts to the symbols to generate a first set of shifted symbols. The operations also include applying a second set of respective phase shifts to the symbols to generate a second set of shifted symbols. The operations also include generating a time-domain signal based on the first set of shifted symbols and the second set of shifted symbols. The operations also include transmitting the time-domain signal. The first set of shifted symbols are assigned to a first number of subcarriers from a first resource unit and the second set of shifted symbols are assigned to a second number of subcarriers from a second resource unit.

A resource unit (RU) refers to a particular group of tones within an orthogonal frequency-division multiple access (OFDMA) communication channel in some embodiments. For example, a resource unit may refer to 48 subcarriers and 4 pilot subcarriers that make up a 52 tone resource unit of a 20 MHz bandwidth transmission. Resource units of a different number of tones may also be available, including, but not limited to, 26 tone resource units, 106 tone resource units, and 242 tone resource units. A data symbol refers to a binary data value (e.g., a ’1’ or a ’0’) or a sequence thereof in some embodiments. For example, a data symbol may refer to a single ’1’ or ’0’ (e.g., in the case of binary phase shift keying modulation) or a data symbol may refer to any of the sequences ’00’, ’01’, ’11’, or ’10’ (e.g., in quadrature phase-shift keying modulation). Data symbols represented by longer sequences of binary data may be used in other modulation techniques, including 8-phase shift keying (8-PSK) or quadrature amplitude modulation (QAM) of various varieties. A symbol refers to a corresponding magnitude and phase representing the binary sequence in the complex plane in some embodiments. For example, a symbol may be 1 (e.g., 1 at 0°) or -1 (e.g., 1 at 180°) in binary phase-shift keying (BPSK); a symbol may be 1 at 45°, 1 at 135°, 1 at 225°, or 1 at 315° in quadrature phase-shift keying (QPSK). Symbols may include magnitudes other than 1 (e.g., in QAM). Mapping a data symbol to a symbol refers to converting the binary value or sequence to the corresponding magnitude and phase in some embodiments. For example, mapping a data symbol to a symbol may refer to using a constellation diagram of the modulation scheme to determine the magnitude and phase corresponding to a particular binary sequence. One of ordinary skill in the art will recognize that symbols (e.g., 1 at 45°, 1 at 135°, 1 at 225°, or 1 at 315°) can also be represented using complex numbers (e.g., $e^{j\pi/4}$, $e^{j3\pi/4}$, $e^{-j3\pi/4}$, $e^{-j\pi/4}$).

Applying a phase shift refers to changing the phase of a symbol in some embodiments. For example, a phase shift can be applied by multiplying a symbol by a number with a magnitude of one and a phase equal to the desired phase shift. A shifted symbol may refer to a symbol that has had a phase shift applied in some embodiments. For example, a shifted symbol may refer to a symbol after it has been accordingly multiplied by a number with a magnitude of one and a specific phase (e.g., the amount of shift). A time-domain signal may refer to a signal obtained by taking an inverse Fourier transform of symbols (or shifted symbols) at different subcarrier frequencies in some embodiments. For example, a time-domain signal (or time-domain symbol) may refer the result of an inverse fast Fourier transform of the subcarriers from four 52 tone resource units and represents the combination of all the symbols on the various subcarriers for a single transmission unit (e.g., 3.2 μs, 12.8 μs, or the amount of time that particular time-domain signal is transmitted).

In some embodiments, the operations also include forming a symbol matrix including a first column including the symbols and a second column including the symbols and generating a matrix stack including a matrix arranged in a partitioned columnar form. A number of columns of the symbol matrix equals the number of the resource units used to send the duplicate symbol transmissions of the symbols. An element of the symbol matrix includes a respective symbol of the symbols, and the element is defined by a column related to a resource unit and a row related to a subcarrier of the resource unit. The first set of respective phase shifts and the second set of respective phase shifts are applied by performing an element-wise multiplication of the symbol matrix by the matrix stack.

A symbol matrix refers to a matrix of the symbols for a single transmission unit (e.g., a single time-domain symbol or time-domain signal) in some embodiments. Each column of the symbol matrix may include the symbols of a resource

unit and each row of the symbol matrix may represent a subcarrier within the resource unit. For example, a symbol matrix may refer to a 52 by 4 matrix of symbols indicating four 52 tone resource units or a symbol matrix may refer to a 26 by 8 matrix of symbols indicating eight 26 tone resource units. A matrix stack refers to a partitioned matrix, wherein a matrix of an individual partition is repeated to form a column of multiple instances of the matrix. For example, a matrix stack may refer to a 52 by 4 matrix where a 4 by 4 matrix has been repeated 13 times and arranged in a column.

In some embodiments, elements of the matrix have a magnitude of one.

In some embodiments, rows of the matrix are orthogonal vectors.

In some embodiments, the matrix is a circulant Hadamard matrix.

An element of the matrix or matrix stack that has a magnitude of one refers to a value that when multiplied by one of the symbols will change only the phase of the symbol in some embodiments. For example, an element with a magnitude of one may refer to -1, 1 at an angle of 45°, $e^{-j\pi/2}$, or $e^{j\pi/2}$, the later two will be recognized to one skilled in the art as complex number representations with a magnitude of one. Orthogonal vectors refer to a set of vectors for which any pair of the vectors in the set have a dot product of zero in some embodiments. For example, orthogonal vectors may refer to the set { [11] and [1 -1] }, because the sum of element-wise multiplication of the two vectors (e.g., multiplication of the same indices or elements holding the same position) is zero. A Hadamard matrix refers to a square matrix that has orthogonal rows and elements that are either 1 or -1 in some embodiments. A circulant matrix refers to a square matrix in which all rows include the same elements and each row is rotated one element to the right relative to the preceding row in some embodiments. A circulant Hadamard matrix refers to a square matrix that is both Hadamard and circulant in some embodiments. For example, a Hadamard matrix may refer to the matrix $H_4$:

$$H_4 = \begin{bmatrix} 1 & 1 & 1 & 1 \\ 1 & -1 & 1 & -1 \\ 1 & 1 & -1 & -1 \\ 1 & -1 & -1 & 1 \end{bmatrix},$$

a circulant matrix may refer to the matrix $C_4$:

$$C_4 = \begin{bmatrix} 1 & 2 & 3 & 4 \\ 4 & 1 & 2 & 3 \\ 3 & 4 & 1 & 2 \\ 2 & 3 & 4 & 1 \end{bmatrix},$$

and a circulant Hadamard matrix may refer to the matrix $H_{C4}$:

$$H_{C4} = \begin{bmatrix} -1 & 1 & 1 & 1 \\ 1 & -1 & 1 & 1 \\ 1 & 1 & -1 & 1 \\ 1 & 1 & 1 & -1 \end{bmatrix}.$$

In some embodiments, an element of the matrix stack that multiplies a respective element of the symbol matrix corresponding to a pilot subcarrier is made one.

In some embodiments, a complex conjugate of the first column of the matrix stack is used to perform the element-wise multiplication on each column of the matrix stack.

A pilot subcarrier refers to a subcarrier of a resource unit with a known magnitude and phase that may be used to synchronize the transmitter and receiver in the network in some embodiments. For example, a pilot subcarrier may refer to one of the four subcarriers with a known magnitude and phase in a 52 tone resource unit. A complex conjugate refers to a complex number for which the phase angle has been multiplied by -1 in some embodiments. For example, the complex conjugate of $e^{j\pi/4}$ may refer to $e^{-j\pi/4}$.

In some embodiments, a number of subcarriers in each of the resource units represented by a respective element of the symbol matrix is not divisible by a number of rows of the matrix. The matrix is repeated to form the matrix stack with a number of stacked rows greater than the number of subcarriers in each of the resource units and a number of last rows of the matrix stack are removed from the matrix stack.

In some embodiments, the matrix has more columns that the number of columns of the symbol matrix and a number of last columns of the matrix stack are removed from the matrix stack.

In some embodiments, a phase shift is not applied to symbols assigned to a pilot subcarrier.

In some embodiments, there are 52 subcarriers in each of the resource units, and the symbols are duplicated onto four resource units, or there are 26 subcarriers in each of the resource units, and the symbols are duplicated onto eight resource units.

Some embodiments relate to a method for transmitting long range communication by sending duplicate symbol transmissions using a number of resource units. The method includes mapping a number of data symbols to a magnitude and a phase to generate a number of symbols. The method also includes applying a first set of respective phase shifts to the symbols to generate a first set of shifted symbols. The method also includes applying a second set of respective phase shifts to the symbols to generate a second set of shifted symbols. The method also includes generating a time-domain signal based on the first set of shifted symbols and the second set of shifted symbols. The method also includes transmitting the time-domain signal. The first set of shifted symbols are assigned to a first number of subcarriers from a first resource unit and the second set of shifted symbols are assigned to a second number of subcarriers from a second resource unit.

In some embodiments, the method also includes forming a symbol matrix including a first column of the symbols and a second column of the symbols and generating a matrix stack including a matrix arranged in a partitioned columnar form. A number of columns of the symbol matrix equals the number of the resource units used to send the duplicate symbol transmissions of the symbols. An element of the symbol matrix includes a respective symbol of the symbols, the element defined by a column related to a resource unit and a row related to a subcarrier of the resource unit. The first set of respective phase shifts and the second set of respective phase shifts are applied by performing an element-wise multiplication of the symbol matrix by the matrix stack.

In some embodiments, elements of the matrix have a magnitude of one.

In some embodiments, the matrix is a circulant Hadamard matrix.

In some embodiments, an element of the matrix stack that multiplies a respective element of the symbol matrix corresponding to a pilot subcarrier is made one.

In some embodiments, a complex conjugate of the first column of the matrix stack is used to perform the element-wise multiplication on each column of the matrix stack.

Some embodiments relate to a system for receiving long range communication using duplicate symbol transmissions using a number of resource units. The system includes one or more circuits configured to perform operations. The operations include receiving a time-domain signal representing a number of data symbols. The operations include extracting a first set of shifted symbols from subcarriers of a first resource unit and a second set of shifted symbols from subcarriers of a second resource unit. The operations include applying a first set of respective phase shifts to the first set of shifted symbols to generate a first set of symbols. The operations also include applying a second set of respective phase shifts to the second set of shifted symbols to generate a second set of symbols. The operations also include combining the first set of symbols and the second set of symbols by generating to form a third set of symbols. Each symbol of the third set of symbols depends on a first corresponding symbol of the first set of symbols and a second corresponding symbol of the second set of symbols. Mapping a magnitude and a phase of each of the third set of symbols to generate a set of data symbols.

In some embodiments, the operations also include forming a symbol matrix including a first column of the first set of shifted symbols and a second column the second set of shifted symbols and generating a matrix stack including a matrix arranged in a partitioned columnar form. A number of columns of the symbol matrix equals the number of the resource units used to send the duplicate symbol transmissions. An element of the symbol matrix includes a respective shifted symbol of the first set of shifted symbols or the second set of shifted symbols, the element defined by a column related to a resource unit and a row related to a subcarrier of the resource unit. The first set of respective phase shifts and the second set of respective phase shifts are applied by performing an element-wise multiplication of the symbol matrix by the matrix stack.

In some embodiments, the matrix is an orthogonal matrix.

In some embodiments, the matrix is a circulant Hadamard matrix.

Extracting symbols from subcarriers of a resource unit refers to determining in the frequency spectrum of the signal in some embodiments. For example, extracting symbols from subcarriers may refer to performing a FFT on the received signal. Combining symbols refers generating a single set of symbols or data symbols from duplicated symbols or data symbols in some embodiments. For example combining symbols may refer to performing a vector average across received duplicate symbols or using the data symbol that occurred most across received duplicate data symbols. An orthogonal matrix refers to a matrix for which rows are orthogonal vectors in some embodiments. For example, an orthogonal matrix may refer to the matrix $\begin{bmatrix} 1 & 1 \\ 1 & -1 \end{bmatrix}$ or the Hadamard matrix $H_4$.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

**Communications Network**

Prior to discussing certain embodiments, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can, for example, include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and/or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and

use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

In some embodiments, fidelity over long distance transmission is improved by duplicating the transmission on multiple resource units. For example, the same symbols may be transmitted and errors can be corrected on the receiver side by comparing the subcarriers across the multiple resource units that were transmitted using the same symbol. While duplicate mode transmission may allow receiver error correction it can have a deleterious effect on the peak-to-average power ratio (PAPR) as the duplicate symbols can cause the crests of the time-domain signal transmission to add constructively. With reference to FIG. 1D, graph 160 illustrates the effect of duplicate mode transmission on PAPR. Trace 162 represents the cumulative probability distribution function of transmissions using a 242 tone resource unit (e.g., a resource unit in which each tone carries unique symbols) and is used as a reference for PAPR. Using trace 162 it is possible to see that the median PAPR transmission of a 242 tone resource unit is a little more than 7.5 dB. The trace 164 represents the cumulative probability distribution function of transmissions duplicated on four 52 tone resource units. Trace 164 shows that that median PAPR for such a transmission is approximately 11 dB. Thus, duplicate mode transmission has caused an increase in the PAPR by approximately 3.5 dB. Larger PAPR may restrict the maximum transmission power and cause a decrease in the signal to noise ratio at the receiver. Using the systems and methods described herein, the PAPR of a duplicate mode transmission can be reduced to that represented by trace 166, representing more than a 3.5 dB decrease in some embodiments.

## Transmission and Receiving Circuitry

FIG. 2A is an illustrative block diagram of circuitry and its interconnection for a system configured to perform duplicate mode transmission of orthogonal frequency-division multiple access (OFDMA) signals at a reduced PAPR. The circuitry, for example, may be implemented by any of the devices of connected to or communicating with the networks shown in FIG. 1A. For example, the circuitry may be implemented within network device 106 and used communicate with any user device 102. In some embodiments, the circuitry may be implemented using one or more memory devices and one or more processors. In some embodiments, the circuitry may be implemented using application specific integrated circuits (ASIC) or a system on a chip integrated circuit.

The processors may be a general purpose or specific purpose processors, an application specific integrated circuit (ASIC), one or more field programmable gate arrays (FPGAs), a group of processing components, or other suitable processing components. The processors may be configured to execute computer code and/or instructions stored in the

memories or received from other computer readable media (e.g., CDROM, network storage, a remote server, etc.). The processors may be configured in various computer architectures, such as graphics processing units (GPUs), distributed computing architectures, cloud server architectures, client-server architectures, or various combinations thereof. One or more first processors can be implemented by a first device, such as an edge device, and one or more second processors can be implemented by a second device, such as a server or other device that is communicatively coupled with the first device and may have greater processor and/or memory resources.

The memories may include one or more devices (e.g., memory units, memory devices, storage devices, etc.) for storing data and/or computer code for completing and/or facilitating the various processes described in the present disclosure. The memories may include random access memory (RAM), read-only memory (ROM), hard drive storage, temporary storage, non-volatile memory, flash memory, optical memory, or any other suitable memory for storing software objects and/or computer instructions. The memories may include database components, object code components, script components, or any other type of information structure for supporting the various activities and information structures described in the present disclosure. The memories may be communicably connected to the processors and can include computer code for executing (e.g., by the processors) one or more processes described herein.

With reference to FIG. 2A, orthogonal frequency-division multiple access (OFDMA) transmission system 200 is shown to include several interconnected circuits according to some embodiments. OFDMA transmission system 200 may include orthogonal frequency-division multiple access (OFDMA) transmission circuit 202, resource unit selection circuit 204, subcarrier assignment circuit 206, symbol mapping circuit 208, duplication mode phase shift circuit 210, inverse fast Fourier transform (FFT) circuit 212; conditioning circuit 214, and modulation circuit 216. It should be understood that in some embodiments the functionality may be distributed differently across any number of circuits. For example, the functionality of the duplication mode phase shift circuit 210 and the inverse fast Fourier transform (FFT) circuit 212 may be performed in a single circuit.

The OFDMA transmission circuit 202 may be configured to control the timing and flow of data through the other circuitry of OFDMA transmission system 200. For example, OFDMA transmission circuit 202 may cause the modules or circuits to execute in a specific order to perform the function of OFDMA transmission system 200. In some embodiments, OFDMA transmission circuit 202 may route the information and/or outputs of other modules that are dependent on the information or use the information as an input. Instructions, modules, portions of memory, etc. described as configured to perform a function (or described as performing the function) may include embodiments for which the module is configured to cause the performance of the function (or is causing the performance of the function). Similarly, instructions, modules, portions of memory, etc. described as configured to cause the performance of a function (or described as causing the performance of a function) may include embodiments for which the module is configured to perform the function (or is performing the function).

The resource unit selection circuit 204 may be configured to receive an indication of the duplication mode. For example, the resource unit selection circuit 204 may receive an indication of a RU26-DUP8 indicating to duplicate a 26 tone set of data symbols across 8 resource units or, as another example, the resource unit selection circuit 204 may receive an indication of a RU52-DUP4 indicating the circuit to duplicate a 52 tone set of data symbols across 4 resource units. The resource unit selection circuit 204 may communicate (e.g., send, propagate, etc.) the selection of resource units to the subcarrier assignment circuit 206.

The subcarrier assignment circuit 206 may receive the data that is to be transmitted and associate data symbols with proper subcarriers given the resource unit assignment. The subcarrier assignment circuit 206 may be configured to break the stream of data into data symbols of the appropriate length for the modulation technique. For example, each binary data (e.g., individual '1' or '0') may be assigned to a subcarrier in BPSK. In some embodiments, longer sequences of binary data may be assigned to a single subcarrier (e.g., a sequence of four bits may be assigned to a subcarrier in 16-QAM). The binary sequences (e.g., data symbols) as assigned to individual subcarriers may be communicated (e.g., sent, propagated, etc.) to the symbol mapping circuit 208.

The subcarrier assignment circuit 206 may be configured to maintain (e.g., store, create, etc.) the distribution of subcarriers associated with a specific resource unit. For example, in a 52 tone resource unit scheme, 48 data symbols may be assigned subcarrier indices -121 through -70, skipping the 4 pilot symbols. If the data is to be duplicated 4 times, the same data symbols may be additionally assigned to subcarriers -68 through -17, for resource unit 2; to subcarriers 17 through 68 for resource unit 3; and to subcarriers 70 through 121 for resource unit 4.

The symbol mapping circuit 208 may be configured to receive the data symbols and convert each data symbol to a symbol including a magnitude and phase (e.g., as represented by a complex number). The symbol mapping circuit 208 may be configured to us a constellation diagram to map data symbol to the corresponding magnitude and phase. For example, in BPSK the symbol mapping circuit 208 may map a binary '1' to the symbol 1 (e.g., a magnitude of 1 and a phase angle of 0°) and a binary '0' to the symbol -1 (e.g., a magnitude of 1 and a phase angle of 180°). In some embodiments, other mappings may be used. For example, in quadrature phase-shift keying the data symbols '11', '01', '00', and '10' may map to $e^{j\pi/4}$, $e^{j3\pi/4}$, $e^{-j3\pi/4}$, $e^{-j\pi/4}$, respectfully. In some embodiments, data symbols may also map to symbols of different magnitude. For example, 16-QAM may map '0001' to a symbol with an amplitude of 0.75 and a phase angle of

161.6°. The symbols associated with each subcarrier may then be communicated to the duplication mode phase shift circuit 210.

The duplication mode phase shift circuit 210 may be configured to apply known phase shifts to the symbols assigned to a number of the subcarriers. Performing a phase shift on the symbols of specific subcarriers may advantageously limit the constructive addition of the subcarriers in the time domain and lead to an improved PAPR. For example, the duplication mode phase shift circuit 210 may be configured to always shift the symbol associated with subcarrier index (e.g., tone index) -121 may always be shifted by 180°. The known phase shift can be removed by the receiver before mapping the received symbol back into a data symbol. In some embodiments, the receiver may operate based on a change in phase rather than a specific phase angle, thus the phase shift may not need to be explicitly removed by the receiver.

In some embodiments, the duplication mode phase shift circuit 210 may be configured to maintain (e.g., store, create, etc.) a mapping between the different subcarrier indexes and the respective phase shift. For example, subcarrier indexes (e.g., each index associated with a different frequency) -121 to -70, -68 to -17, 17 to 68, and 70 to 121 may be assigned to duplicate resource units 1, 2, 3, and 4, respectively and duplication mode phase shift circuit 210 may apply a 180° phase shift to every fourth subcarrier index starting with the first index in resource unit 1, the second index in resource unit 2, the third index in resource unit 3, and the fourth index in resource unit 4.

The duplication mode phase shift circuit 210 may maintain any mapping of subcarrier index to the respective phase shifts; however, some phase shift strategies may have an improved effect on the ultimate PAPR of the transmission. In some embodiments, no phase shift is applied to a pilot signal to avoid necessitating changes to any of the synchronization circuitry based on the known subcarrier symbols. In some embodiments, phase shifts can be other than 180°. The phase shift can, for example, be 90° or any other phase shift that causes a decrease in the PAPR. In some embodiments, the phase shifts can be found using Hadamard matrices as will be described herein with reference to FIGS. 3A and 3B. In some embodiments, a phase shift is applied by multiplying the symbol by a complex number having a non-zero phase angle.

The inverse fast Fourier transform (FFT) circuit 212 may be configured to receive the symbols (some of which may have been shifted by duplication mode phase shift circuit 210) associated with their respective subcarrier frequency and perform an inverse Fourier transform (e.g., the inverse FFT) to generate a time domain signal at the baseband frequencies. The time-domain signal associated with the current data symbols may last for a particular duration. In some embodiments, the duration of the time-domain signal depends on the frequency spacing of the subcarrier tones. For example, the time-domain signal may have a period of 12.8 μs related to the inverse of a 78.125 kHz subcarrier spacing.

The time-domain signal may be delivered to the conditioning circuit 214. In some embodiments, the conditioning circuit 214 may perform additional processing to prepare the time-domain signal for transmission. The conditioning circuit 214 may be configured to buffer several time-domain signals so that a stream of signals can be transmitted without waiting for the previous circuits to complete their calculations. In some embodiments, Guard periods (e.g., time periods when useful data is not transmitted) may also be added before and after the duration of the time-domain signal to prevent the time-domain signal from one set of data symbols (e.g., data that was assigned to subcarriers in the subcarrier assignment circuit 206 for a single iteration) from interfering with the time-domain signal from another set of data symbols. Guard periods may be especially important when multipath interference causes different time delays between time-domain signals.

Conditioned time-domain signals leaving the conditioning circuit 214 may be communicated to the modulation circuit 216. The modulation circuit 216, may be configured to multiply the time-domain signal by the carrier frequency (e.g., one of the channels in the 2.4 GHz band or 5GHz band) before being transmitted.

FIG. 2B is an illustrative block diagram of circuitry and its interconnection for a system configured to perform duplicate mode receiving of orthogonal frequency-division multiple access (OFDMA) signals embodies as an orthogonal frequency-division multiple access (OFDMA) receiver system 250. The circuitry of OFDMA receiver system 250 may be implemented within network device 106 and used communicate with any user device 102 and can use similar components (e.g., processors, ASICs, system-on-chip) as described for OFDMA transmission system 200.

In some embodiments, of OFDMA receiver system 250 includes OFDMA receiver circuit 252, demodulation circuit 256, FFT circuit 258, duplication mode phase shift circuit 260, symbol mapping circuit 262, comparison circuit 264, and data streaming circuit. 266. It should be understood that in some embodiments, functionality may be distributed differently across any number of circuits. For example, the functionality of the duplication mode phase shift circuit 260 and the fast Fourier transform (FFT) circuit 258 may be performed in a single circuit. The circuitry of the OFDMA receiver system 250 may include processors executing instructions stored on memory devices, ASICs, system-on-a-chip architectures, as described previously.

The OFDMA receiver circuit 252 contains similar functionality as OFDMA transmitter circuit though the sequence is reversed such that a time-domain signal is received at the carrier frequency and converter to a data stream. The OFDMA receiver circuit 252 may be configured to control the timing and flow of data through the other circuitry of OFDMA receiver circuit 252. For example, OFDMA receiver circuit 252 may cause the modules or circuits to execute in a specific order to

perform the function of OFDMA receiver system 250. In some embodiments, OFDMA receiver circuit 252 may route the information and/or outputs of other modules that are dependent on the information or use the information as an input.

The demodulation circuit 256 may be configured to receive a time domain signal (e.g., from an antenna and amplifier circuit) and convert it to a digital signal at the baseband frequency. The demodulation circuit 256 may, for example, include both demodulation circuitry as well as analog to digital converters to convert the received analog signal to a digital signal for processing by other circuits of the OFDMA receiver system 250.

The demodulation circuit 256 may communicate the baseband time-domain signal to the FFT circuit 258. The FFT circuit may be configured to convert to a time period (e.g., a 12.8 μs, or the time frequency corresponding to the inverse of the subcarrier frequency spacing) of the time-domain signal back to a number of phase shifted symbols at the various subcarrier frequencies. The output of the FFT circuit 258, for example, may include a phase shifted signal (e.g., the phase shift associated with the known phase shift applied by the transmitter) for each subcarrier index (e.g., frequency).

In some embodiments, the receiver's duplication mode phase shift circuit 260 applies a phase shift to counter act (e.g., reverse, negate) the phase shift applied by the transmitter's duplication mode phase shift circuit 210. Similar to the transmitter, the duplication mode phase shift circuit 260 of the receiver may be configured to apply known phase shifts to the symbols assigned to a number of the subcarriers. The known phase shift, for example, can be specified to negate (e.g., cancel, remove, etc.) the phase shifts applied by the transmitter. By negating the phase shift applied by the transmitter using the duplication mode phase shift circuit 260 the subcarriers transmitted with the same data symbols again have the same symbol (e.g., assuming no interference or other channel effects have caused errors)

In some embodiments, the phase shifts applied by the duplication mode phase shift circuit 210 are always 180°. A subsequent phase shift of 180° by the duplication mode phase shift circuit 260 will cancel the original 180° phase shift. Thus, in scenarios where the transmitter adds only 180° phase shifts, the transmitter and receiver can apply the same phase shifts to the same carrier frequencies. In some embodiments, a general phase shift is applied by the transmitter and the receiver may perform a phase shift of the same amount but in the opposite direction to cancel the original phase shift. The phase shifts that are applied to the various subcarriers in different duplicate transmission modes may be prearranged (e.g., configured in the software or firmware of the transmitter and receiver) or the transmitter may communicate the mapping between subcarrier frequency and phase shift to the receiver (e.g., using a unshifted communication) and then proceed to use the communicated phase shift mapping in future communications (e.g., until the end of the transmission, or the expiration of predetermined time).

In some embodiments, a phase shift is applied by multiplying the symbol by a complex number having a non-zero phase angle. Specifically, if the transmitter multiplies the symbol by a complex number to apply the phase shift, the receiver may multiply the received symbol by the complex conjugate of the complex number to negate the phase shift. In some embodiments, the change in phase is used to indicate the symbols (e.g., instead of a specific phase) and it may not be necessary to negate the phase shift added by the transmitter.

In some embodiments, the symbol for each subcarrier index is communicated from the duplication mode phase shift circuit 260 to the symbol mapping circuit 262 and the comparison circuit 264. The symbol mapping circuit 262 and the comparison circuit 264 may be applied in either order depending on the techniques used therein. The symbol mapping circuit 262 is similar to that of the transmitter in some embodiments. The symbol mapping circuit 262 may be configured to convert the symbols to respective data symbols using the constellation diagram of the current modulation scheme. The comparison circuit 264 corrects, based on the duplication mode, any mismatch between symbols associated with subcarriers that should receive the same data in a given duplicate mode. The comparison can be performed on binary data (e.g., after the symbol mapping circuit 262) or on the symbols (e.g., before the symbol mapping circuit).

Symbols duplicated onto multiple subcarriers can be combined after they are received. For example, the comparison circuit 264 may compare the data symbols across the subcarriers that are assigned to be duplicates of each other (e.g., a specific carrier index of each resource unit) and determine a combined data symbol based on a majority system (e.g., the data symbol with the most instances is the combined symbol). In some embodiments, the comparison circuit 264 may find an average symbol (e.g., by taking the vector average of all the symbols to be combined) and determining the closest symbol on the constellation diagram.

The data associated with a single resource unit (e.g., the duplicates having been previously combined) can be passed to the data streaming circuit 266. The data streaming circuit 266 may be configured to order the data on the subcarriers of the resource unit into a single stream completing the reception and decoding of the time-domain signal into a useful binary data.

With reference to FIG. 3A the operations of duplication mode phase shift circuit 210 are shown according to some embodiments. FIG. 3A, for example, shows applying the phase shifts by performing an element-wise matrix multiplication with the duplicated symbols. Considering a resource unit with N tones (e.g., 26 tones, 52 tones, etc.). The symbols associated with the data of each subcarrier (e.g., tone) can be arranged in a single symbol column 302 (e.g., after data symbols have been converted to symbols). The symbol column 302 can be duplicated D times to fill D resource units. The symbol matrix 311 may include the duplicated columns 304, 306, 308, to 310 as shown in FIG. 3A. The symbol matrix may be N by D in size.

Additionally, a matrix 314 (e.g., represented by matrix square matrix H) that includes at least D columns can be arranged in a partitioned columnar form (e.g., one matrix H on top of the next matrix H and so on) to form the matrix stack 316. In some embodiments, the phase shifts of duplication mode phase shift circuit 210 are applied by performing element-wise multiplication 312 of the symbol matrix 311 including columns 304-310 by the matrix stack 316. For example, the matrix H may contain only numbers with a magnitude of one (e.g., 1, -1, $e^{j\pi/4}$, etc.). After the symbols have been shifted by the multiplication, the shifted symbol columns 320-326 can be delivered to the inverse FFT for conversion into a time-domain signal.

In some embodiments, the matrix H 314 may have more columns than the number of duplicates (D), and/or the number of tones (e.g., subcarriers) of the resource unit may not be divisible by the number of rows of the matrix H 314. The matrix stack 316 may be bigger than the symbol matrix and the matrix stack 316 may be truncated as shown by removing the area 318 separated by the dashed line.

In some embodiments, the matrix stack may include an element associated with a pilot subcarrier where the element is other than one (e.g., a phase shift is specified for that element). The element may be replaced with the number one so that no phase shift is applied to a pilot subcarrier.

In some embodiments, it is desirable that the first copy (e.g., the first resource unit) has no phase shift applied to any of its symbols. To eliminate a phase shift associated with the first resource unit while maintaining desirable PAPR reduction, the complex conjugate of the first column may be multiplied, element-wise, by each column of the matrix stack (including the first column).

In some embodiments, the subcarrier indices (e.g., as part of the of the symbol matrix) can be permuted prior to multiplication by the matrix stack 316. After multiplication, the permutation can be inverted (e.g., negated, reversed) so that the symbols are in the proper locations prior to application of the inverse FFT. In some embodiments, the linear transformations of the matrix 314 can be performed prior to generating the matrix stack 316. For example, the matrix can be multiplied by -1 (e.g., changing the signals that receive a phase shift). Rows and/or columns of the matrix 314 may also be permuted prior to generating the matrix stack.

The specification of the matrix H can have a significant effect on the ultimate PAPR reduction relative to a duplicate mode. Hadamard matrices (e.g., with orthogonal rows) provide a significant reduction in PAPR. For 52 tone resource units duplicated four time (e.g., RU52-DUP4) three different matrices for matrix H 314 were investigated. The standard Hadamard matrix of size 4:

$$H_4 = \begin{bmatrix} 1 & 1 & 1 & 1 \\ 1 & -1 & 1 & -1 \\ 1 & 1 & -1 & -1 \\ 1 & -1 & -1 & 1 \end{bmatrix},$$

the circulant Hadamard matrix of size 4:

$$H_{C4} = \begin{bmatrix} -1 & 1 & 1 & 1 \\ 1 & -1 & 1 & 1 \\ 1 & 1 & -1 & 1 \\ 1 & 1 & 1 & -1 \end{bmatrix},$$

and the complex Hadamard matrix of size 4:

$$CH_4 = \begin{bmatrix} 1 & 1 & 1 & 1 \\ 1 & je^{j\alpha} & -1 & -je^{j\alpha} \\ 1 & -1 & 1 & -1 \\ 1 & -je^{j\alpha} & -1 & je^{j\alpha} \end{bmatrix}.$$

Both the circulant and the standard Hadamard matrix of four offered similar PAPR as shown as the dash dot line of FIG. 1D. The complex Hadamard matrix provided a median PAPR roughly 0.5 dB lower than the other Hadamard matrices for values of $\alpha = 0$ or $\pi$ and roughly a 0.25 dB decrease in median PAPR for $\alpha = \pi/2$.

Further testing of matrices was performed for different constellation diagrams (e.g., BPSK and QPSK). All matrices and duplicate modes were able to reduce the median PAPR to less than that of the 242 tone resource unit baseline as indicated in table 1 below.

Table 1: empirical PAPR results

| | BPSK (dB) | | | QPSK (dB) | | |
|---|---|---|---|---|---|---|
| | **Mean PAPR** | **Median PAPR** | **90% CDF PAPR** | **Mean PAPR** | **Median PAPR** | **90% CDF PAPR** |
| **RU242** | 7.93 | 7.85 | 9.00 | 8.38 | 8.31 | 9.34 |
| **RU52** | 6.73 | 6.66 | 8.01 | 7.28 | 7.20 | 8.45 |
| **4xDup RU52** | 11.53 | 11.43 | 11.97 | 12.10 | 12.01 | 11.98 |
| **4xDup RU52 P4** | 7.44 | 7.35 | 8.62 | 7.93 | 7.86 | 8.98 |
| **8xDup RU26 P8** | 7.49 | 7.40 | 8.53 | 7.90 | 7.84 | 8.79 |
| **9xDup RU26 P9** | 7.82 | 7.75 | 8.76 | 7.90 | 7.84 | 8.80 |
| **9xDup RU26 P32** | 7.54 | 7.48 | 8.51 | 7.93 | 7.88 | 8.77 |

RU242 represents a 242 tone resource unit transmission. RU52 represents a single (e.g., not duplicated) 52 tone resource unit transmission, 4xDUP RU52 represents a 52 tone resource unit transmission duplicated 4 times, 4xDUP RU52 P4 represents a 52 tone resource unit transmission duplicated 4 times subjected to phase shift following the procedure described with reference to FIG. 3A using the standard Hadamard matrix of size 4, 8xDUP RU26 P8 represents a 26 tone resource unit transmission duplicated 8 times subjected to phase shift following the procedure described with reference to FIG. 3A using the standard Hadamard matrix of size 8, 9xDUP RU26 P9 represents a 26 tone resource unit transmission duplicated 9 times subjected to phase shift following the procedure described with reference to FIG. 3A using the polyphase matrix of size 9, defined by:

$$P_9 = \begin{bmatrix} x_0 & x_0 & x_0 & x_0 & x_0 & x_0 & x_0 & x_0 & x_0 \\ x_0 & x_1 & x_2 & x_3 & x_4 & x_{-4} & x_{-3} & x_{-2} & x_{-1} \\ x_{-1} & x_1 & x_3 & x_{-4} & x_{-2} & x_0 & x_2 & x_4 & x_{-3} \\ x_{-3} & x_0 & x_3 & x_{-3} & x_0 & x_3 & x_{-3} & x_0 & x_3 \\ x_3 & x_{-2} & x_2 & x_{-3} & x_1 & x_{-4} & x_0 & x_4 & x_{-1} \\ x_{-1} & x_4 & x_0 & x_{-4} & x_1 & x_{-3} & x_2 & x_{-2} & x_3 \\ x_3 & x_0 & x_{-3} & x_3 & x_0 & x_{-3} & x_3 & x_0 & x_{-3} \\ x_{-3} & x_4 & x_2 & x_0 & x_{-2} & x_{-4} & x_3 & x_1 & x_{-1} \\ x_{-1} & x_{-2} & x_{-3} & x_{-4} & x_4 & x_3 & x_2 & x_1 & x_0 \end{bmatrix},$$

where $x_n = e^{jn2\pi/9}$,

and 9xDUP RU26 P32 represents a 26 tone resource unit transmission duplicated 9 times subjected to phase shift following the procedure described with reference to FIG. 3A using the standard Hadamard matrix of size 32.

It should be understood that while many of the examples herein were described for either 52 tone or 26 tone resource units with a duplication of 4, 8, or 9, the procedure described can be applied to communication strategies that use any number of tones within a resource unit and/or any number of duplications.

With reference to FIG. 3B the operations of duplication mode phase shift circuit 260 of the receiver are shown according to some embodiments. FIG. 3B, for example, shows applying the phase shifts by performing an element-wise matrix multiplication of the symbols received from the FFT circuit 258. The duplication mode phase shift circuit 260 circuit may be configured to arrange the symbols similarly to duplication mode phase shift circuit 210 of the transmitter. For example, the symbols associated with a resource unit can be ordered into a single column (e.g., column 352, 354, 356, 358) and combined to form a symbol matrix 359.

In some embodiments, a matrix H* 362 is generated negate or reverse the phase shift of applied within the transmitter. The matrix H* 362 may be defined as the element-wise complex conjugate of the matrix H 314 from the transmitter's duplication mode phase shift circuit 210. The matrix H* 362 can be arranged in a partitioned columnar form (e.g., one matrix H* 362 on top of the next matrix H* 362 and so on) to form the matrix stack 364.

Element-wise matrix multiplication 360 may be performed to apply the phase shift of the receiver (e.g., reversing the phase shift of the transmitter). It is noted that if the elements of the matrix H 314 and the matrix H* 362 are complex conjugates, after both multiplications have been performed the symbols may no longer be phase shifted and can be compared to the constellation diagram (e.g., in symbol mapping circuit 262). As noted with reference to the transmitter, the matrix H* 364 may have more columns than D, and/or the number of tones (e.g., subcarriers) of the resource unit may not

be divisible by the number of rows of the matrix H* 364. The matrix stack 364 may be bigger than the symbol matrix and the matrix stack 364 may be truncated as shown by removing the area 366 separated by the dashed line.

After the element-wise matrix multiplication 360, each of the resource units should include in the respective columns (e.g., columns 368-374) the same symbols. The symbols can be combined into a single column of symbols 376 which can be ordered into a useful data stream by the data streaming circuit 266. Long travel attenuation, multipath interference, etc. can cause some of the symbols to be recovered incorrectly and the duplicated versions of the symbols can be used to determine the symbol that was most likely transmitted. Symbols may first be converted into their binary data symbol form using the constellation diagram. Each bit recovered may be subject to a majority vote combination strategy. For example, in a transmission duplicated four times using QPSK if the symbols received in each resource unit for a given index are '01', '01', '11', '01' a majority vote combination strategy would output '01' being the data symbol recovered from three of the four subcarriers. The combination may be performed on the whole data symbol (e.g., 2 bits in QPSK) or the combination may be performed bit-wise. In some embodiments, the recovered symbol (e.g., magnitude and phase) in each resource unit for a given index (e.g., row of the duplicated symbol matrix 361) is averaged by performing a vector average or other suitable technique before conversion to a data symbol using the constellation diagram.

## Operational Flow

The methods described herein allow for the benefits of duplicate mode OFDMA transmissions including redundancy and error resilience, while maintaining acceptable PAPR allowing for signal transmission power similar to non-duplicate mode transmissions.

With reference to FIG. 4A, flow of operations 400 shows operations for duplicate mode transmissions with a phase shift according to some embodiments. Flow 400, for example may be performed by the circuits of OFDMA transmission system 200. Flow 400 may include mapping a number of data symbols to a magnitude and phase to generate a plurality of symbols in operation 402. For example, binary data symbols (e.g., individual bits or sequences of bits) can be assigned to a subcarrier (e.g., tone) of a resource unit and converted to respective symbols using a constellation diagram for the desired communication technique (e.g., BPSK, QPSK, etc.).

In some embodiments, flow 400 includes applying a first set of respective phase shifts to the symbols to form a first set of shifted symbols in operation 404. It is not necessary that all symbols receive a phase shift. For example, the symbol assigned to every fourth subcarrier index may receive a 180° phase shift (e.g., be multiplied by -1). Other phase shifts may also be applied, for example, a 90° phase shift can be applied by multiplying by $e^{j\pi/2}$. In some embodiments, flow 400 includes applying a second set of respective phase shifts to the symbols to form a second set of shifted symbols in operation 406. Phase shifts may be applied to different symbols in generating the second set of shift symbols. For example, every fourth subcarrier index may receive a 180° phase shift (e.g., be multiplied by -1), but starting with the second subcarrier (e.g., second tone or the resource unit) index rather than the first.

In some embodiments, the sets of shifted symbols formed (e.g., generated in operations 404 and 406) are assigned to subcarriers of different resource units. The same data symbols are used to generate both sets of shifted symbols so both resource units are transmitting the same data. Advantageously, due to the various phase shifts, the PAPR of the duplicate transmission is not unduly increased.

In some embodiments, flow 400 includes generating a time-domain signal based on the first set of shifted symbols and the second set of shifted symbols in operation 408. The time domain signal may be determined by performing an inverse Fourier transform (e.g., the FFT) on the spectrum of subcarriers with the associated shifted symbols assigned. A single time-domain signal may have a duration that depends on the subcarrier frequency spacing. For example, the duration of the time domain signal may be the inverse of the subcarrier frequency spacing (e.g., 12.8 μs for 78.125 kHz spacing). In some embodiments, guard periods may be added to the beginning and/or end of the time-domain signal and useful data may not be transmitted during these periods. The guard period may be used to prevent interference from one time-domain signal with the next time-domain signal when multipath propagation delays are of concern. Flow 400 may include transmitting the time-domain signal in operation 410.

With reference to FIG. 4B, flow 420 of operations shows operations for applying phase shifts to the various symbols by performing matrix multiplication according to some embodiments. Flow 420, for example, can be performed by duplication mode phase shift circuit 210 and/or 260. Phase shifts can be applied by multiplying a symbol by a number (e.g., complex number) with a magnitude of one and the desired phase shift. In some embodiments, the flow 420 includes forming a symbol matrix (e.g., symbol matrix 311) including a first column including the symbols and a second column including the symbols in operation 422. Each column may represent the symbols that are ultimately to be assigned to a resource unit. More than two columns may be used, for example, symbols may be duplicate four times, eight times, nine times, etc. based on the duplication mode chosen. Each row of the symbol matrix may be the subcarrier indexes that receive the same symbol as part of the duplication process.

In some embodiments, flow 420 includes generating a matrix stack (e.g., matrix stack 316) including a matrix (e.g., matrix 314) arranged in a partitioned columnar form in operation 424. For example, the matrix may be repeated and

organized so that there is a column of the repeated matrices one on top of the other. The matrix may have more columns than the symbol matrix and may be repeated a number of times such that the matrix stack has more rows than the symbol matrix. Several appropriate matrices that result in lowered PAPR when used to apply phase shifts by the techniques described herein have been previously described. For example, the matrix may be a Hadamard matrix of size 4, 8, or 32; a circulant Hadamard matrix; a complex Hadamard matrix; a polyphase matrix of size 9; or any other suitable matrix.

Flow 420 may include truncating the matrix stack so that the matrix stack has the same number of rows and columns as the symbol matrix in operation 426. For example, excess columns and rows can be removed. In some embodiments, flow 420 may include performing an element-wise multiplication of the symbol matrix by the matrix stack in operation 428. After the multiplication the phase shift has been appropriately applied to the symbols assigned to the various resource units.

With reference to FIG. 5, flow 500 of operations shows operations for receiving duplicate mode OFDMA transmissions with phase shifts according to some embodiments. Flow 500, for example, can be performed by OFDMA receiver system 250. In some embodiments, a time-domain signal representing a number of data symbols is received in operation 502. Flow 500 may include extracting a first set of shifted symbols from subcarriers of a first resource unit and a second set of shifted symbols from subcarriers of a second resource unit. For example, the process of extracting shifted symbols from the subcarriers may be performed using the FFT.

In some embodiments, flow 500 includes applying a first set of respective phase shifts to the first set of shifted symbols to generate a first set of symbols in operation 506. Flow 500 may also include applying a second set of respective phase shifts to the second set of shifted symbols to generate a second set of symbols in operation 508. The phase shifts applied in operations 506 and/or 508 can be used to reverse (e.g., negate) the phase shifts applied during transmission. The phase shifts may be prearranged, for example, stored in the software or firmware of the transmitter and receiver. In some embodiments, the transmitter may determine the phase shifts to be used and send the necessary information (e.g., the phase shifts or their inverse) to the receiver so that the shift can be undone, and the symbols can be recovered. In some embodiments, applying the phase shifts of operation 506 and 508 can be done in parallel by performing element-wise matrix multiplication as described with reference to FIG. 3B and/or using operations from flow 420.

In some embodiments, flow 500 includes combining the first set of symbols and the second set of symbols by generating to form a third set of symbols in operation 510. Combining the symbols, for example, can be performed by vector averaging of the symbols corresponding to subcarrier indexes that are assigned carry duplicated data. For example, the subcarrier indexes that carry duplicated data may depend on the mode (e.g., duplication mode). After symbols have been combined in operation 510 the resultant symbols from the third set of symbols can be mapped to a data symbol (e.g., using the magnitude and phase of the symbol) in operation 512. The data symbols may be converted into a stream to complete the reception of data.

In some embodiments, symbols are mapped to a data symbol before being combined and the combination is performed on a bit-wise basis. For example, the bit generated by combining the bit of multiple resource units may obtained by a majority vote.

### Configuration of Exemplary Embodiments

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The construction and arrangement of the systems and methods as shown in the various exemplary embodiments are illustrative only. Although only a few embodiments have been described in detail in this disclosure, many modifications are possible (e.g., variations in port or destination quantity, data types, methods of reinsertion, reintroduction, etc., values of parameters, arrangements, etc.). For example, the position of elements may be reversed or otherwise varied, the connections between elements may be direct or indirect, such that there may be one or more intermediate elements connected in between, and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions, and arrangement of the

exemplary embodiments without departing from the scope of the present disclosure. For example, the embodiments of the present disclosure may be implemented by a single device and/or system or implemented by a combination of separate devices and/or systems.

The term "or," as used herein, is used in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is understood to convey that an element may be either X, Y, Z; X and Y; X and Z; Y and Z; or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

References herein to the positions of elements (i.e., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps, and decision steps.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer (i.e., ASICs or FPGAs) or any other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

## Claims

1. A system, comprising:
one or more circuits (202, 204, 206, 208, 210, 212, 214, 216) configured to perform operations comprising:

    mapping a plurality of data symbols to a magnitude and a phase to generate a plurality of symbols;
    applying a first set of respective phase shifts to the plurality of symbols to generate a first plurality of shifted symbols;
    applying a second set of respective phase shifts to the plurality of symbols to generate a second plurality of shifted symbols;
    generating a time-domain signal based on the first plurality of shifted symbols and the second plurality of shifted symbols; and
    transmitting the time-domain signal,
    wherein the first plurality of shifted symbols is assigned to a first plurality of subcarriers from a first resource unit and the second plurality of shifted symbols is assigned to a second plurality of subcarriers from a second resource unit.

2. The system of claim 1, the operations further comprising:

    Forming a symbol matrix (311) comprising a first column comprising the plurality of symbols and a second column comprising the plurality of symbols; and
    generating a matrix stack (316) comprising a matrix arranged in a partitioned columnar form,
    wherein a number of columns of the symbol matrix (311) equals a number of resource units used to send duplicate symbol transmissions of the plurality of symbols,

wherein an element of the symbol matrix (311) comprises a respective symbol of the plurality of symbols, the element defined by a column related to a resource unit and a row related to a subcarrier of the resource unit, and wherein the first set of respective phase shifts and the second set of respective phase shifts are applied by performing an element-wise multiplication of the symbol matrix (311) by the matrix stack (316).

**3.** The system of claim 2, wherein elements of the matrix have a magnitude of one.

**4.** The system of claim 3, wherein rows of the matrix are orthogonal vectors.

**5.** The system of claim 4, wherein the matrix is a circulant Hadamard matrix.

**6.** The system of any of claims 2 to 5, comprising at least one of the following features:

(i) wherein an element of the matrix stack (316) that multiplies a respective element of the symbol matrix (311) corresponding to a pilot subcarrier is made one;
(ii) wherein a complex conjugate of the first column of the matrix stack (316) multiplying is used to perform the element-wise multiplication on each column of the matrix stack (316).

**7.** The system of any of claims 2 to 6, comprising at least one of the following features:

(i) wherein:

a number of subcarriers in each of the resource units represented by a respective element of the symbol matrix (311) is not divisible by a number of rows of the matrix,
the matrix is repeated to form the matrix stack (316) with a number of stacked rows greater than the number of subcarriers in each of the resource units, and
a number of last rows of the matrix stack (316) are removed from the matrix stack (316);

(ii) wherein:

the matrix has more columns that the number of columns of the symbol matrix (311), and
a number of last columns of the matrix stack (316) are removed from the matrix stack (316).

**8.** The system of any of claims 1 to 7, comprising at least one of the following features:

(i) wherein a phase shift is not applied to symbols assigned to a pilot subcarrier;
(ii) wherein:

there are 52 subcarriers in the first resource unit and 52 subcarriers in the second resource unit, and the plurality of symbols are duplicated onto four resource units, or
there are 26 subcarriers in the first resource unit and 26 subcarriers in the second resource unit, and the plurality of symbols are duplicated onto eight resource units.

**9.** A method, comprising:

mapping a plurality of data symbols to a magnitude and a phase to generate a plurality of symbols;
applying a first set of respective phase shifts to the plurality of symbols to generate a first plurality of shifted symbols;
applying a second set of respective phase shifts to the plurality of symbols to generate a second plurality of shifted symbols;
generating a time-domain signal based on the first plurality of shifted symbols and the second plurality of shifted symbols; and
transmitting the time-domain signal,
wherein the first plurality of shifted symbols is assigned to a first plurality of subcarriers from a first resource unit and the second plurality of shifted symbols is assigned to a second plurality of subcarriers from a second resource unit.

**10.** The method of claim 9, further comprising:

forming a symbol matrix (311) comprising a first column comprising the plurality of symbols and a second column comprising the plurality of symbols; and
generating a matrix stack (316) comprising a matrix arranged in a partitioned columnar form,
wherein a number of columns of the symbol matrix (311) equals a number of resource units used to send duplicate symbol transmissions of the plurality of symbols,
wherein an element of the symbol matrix (311) comprises a respective symbol of the plurality of symbols, the element defined by a column related to a resource unit and a row related to a subcarrier of the resource unit, and
wherein the first set of respective phase shifts and the second set of respective phase shifts are applied by performing an element-wise multiplication of the symbol matrix (311) by the matrix stack (316).

**11.** The method of claim 10, wherein elements of the matrix have a magnitude of one;
in particular wherein the matrix is a circulant Hadamard matrix.

**12.** The method of claim 10 or 11, comprising at least one of the following features:

(i) wherein an element of the matrix stack (316) that multiplies a respective element of the symbol matrix (311) corresponding to a pilot subcarrier is made one;
(ii) wherein a complex conjugate of the first column of the matrix stack (316) is used to perform the element-wise multiplication on each column of the matrix stack (316).

**13.** A device, comprising:
one or more circuits (202, 204, 206, 208, 210, 212, 214, 216) configured to perform operations comprising:

receiving a time-domain signal representing a plurality of data symbols;
extracting a first plurality of shifted symbols from subcarriers of a first resource unit and a second plurality of shifted symbols from subcarriers of a second resource unit;
applying a first set of respective phase shifts to the first plurality of shifted symbols to generate a first plurality of symbols;
applying a second set of respective phase shifts to the second plurality of shifted symbols to generate a second plurality of symbols;
combining the first plurality of symbols and the second plurality of symbols to form a third plurality of symbols, wherein each symbol of the third plurality of symbols is based on at least a first corresponding symbol of the first plurality of symbols and a second corresponding symbol of the second plurality of symbols; and
mapping a magnitude and a phase of each of the third plurality of symbols to generate the plurality of data symbols.

**14.** The device of claim 13, the operations further comprising:

forming a symbol matrix (311) comprising a first column comprising the first plurality of shifted symbols and a second column comprising the second plurality of shifted symbols; and
generating a matrix stack (316) comprising a matrix arranged in a partitioned columnar form,
wherein a number of columns of the symbol matrix (311) equals a number of resource units used to send duplicate symbol transmissions,
wherein an element of the symbol matrix (311) comprises a respective shifted symbol of the first plurality of shifted symbols or the second plurality of shifted symbols, the element defined by a column related to a resource unit and a row related to a subcarrier of the resource unit, and
wherein the first set of respective phase shifts and the second set of respective phase shifts are applied by performing an element-wise multiplication of the symbol matrix (311) by the matrix stack (316).

**15.** The device of claim 14, comprising at least one of the following features:

(i) wherein the matrix is an orthogonal matrix;
(ii) wherein the matrix is a circulant Hadamard matrix.

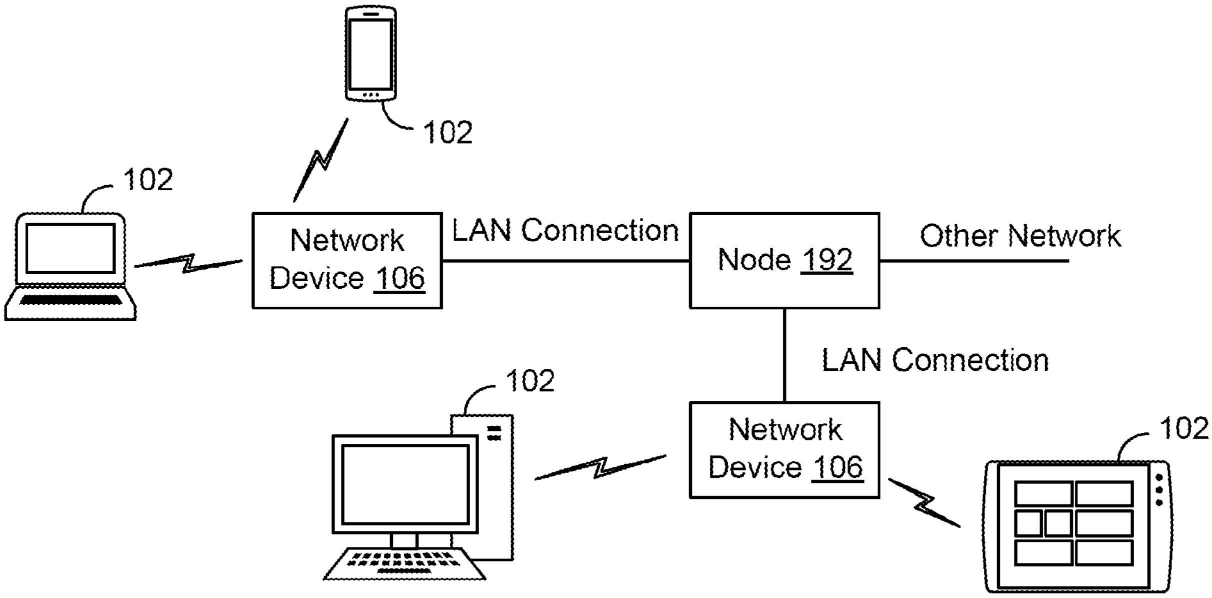
102
102
Network
Device 106
LAN Connection
Node 192
Other Network
LAN Connection
102
Network
Device 106
102

FIG. 1A

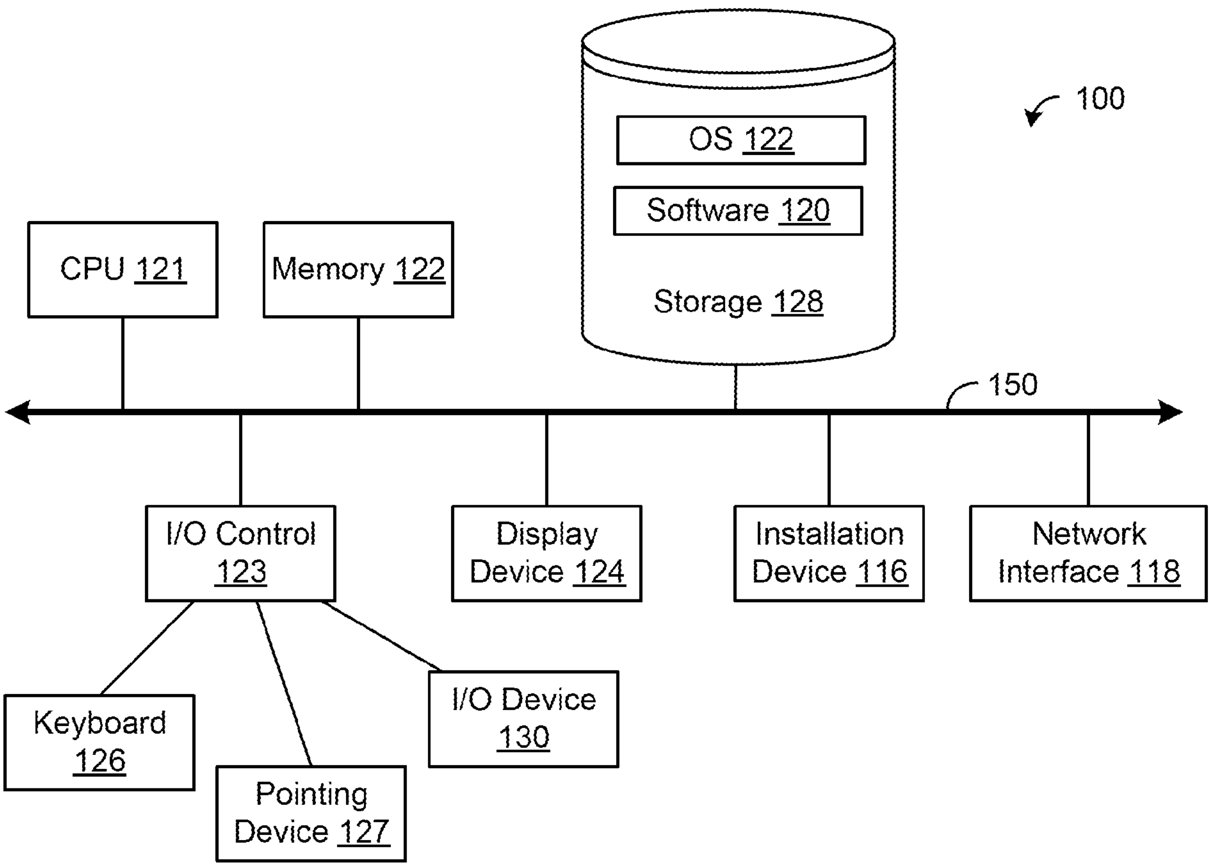
100
OS 122
Software 120
Storage 128
CPU 121
Memory 122
150
I/O Control
123
Display
Device 124
Installation
Device 116
Network
Interface 118
Keyboard
126
Pointing
Device 127
I/O Device
130

FIG. 1B

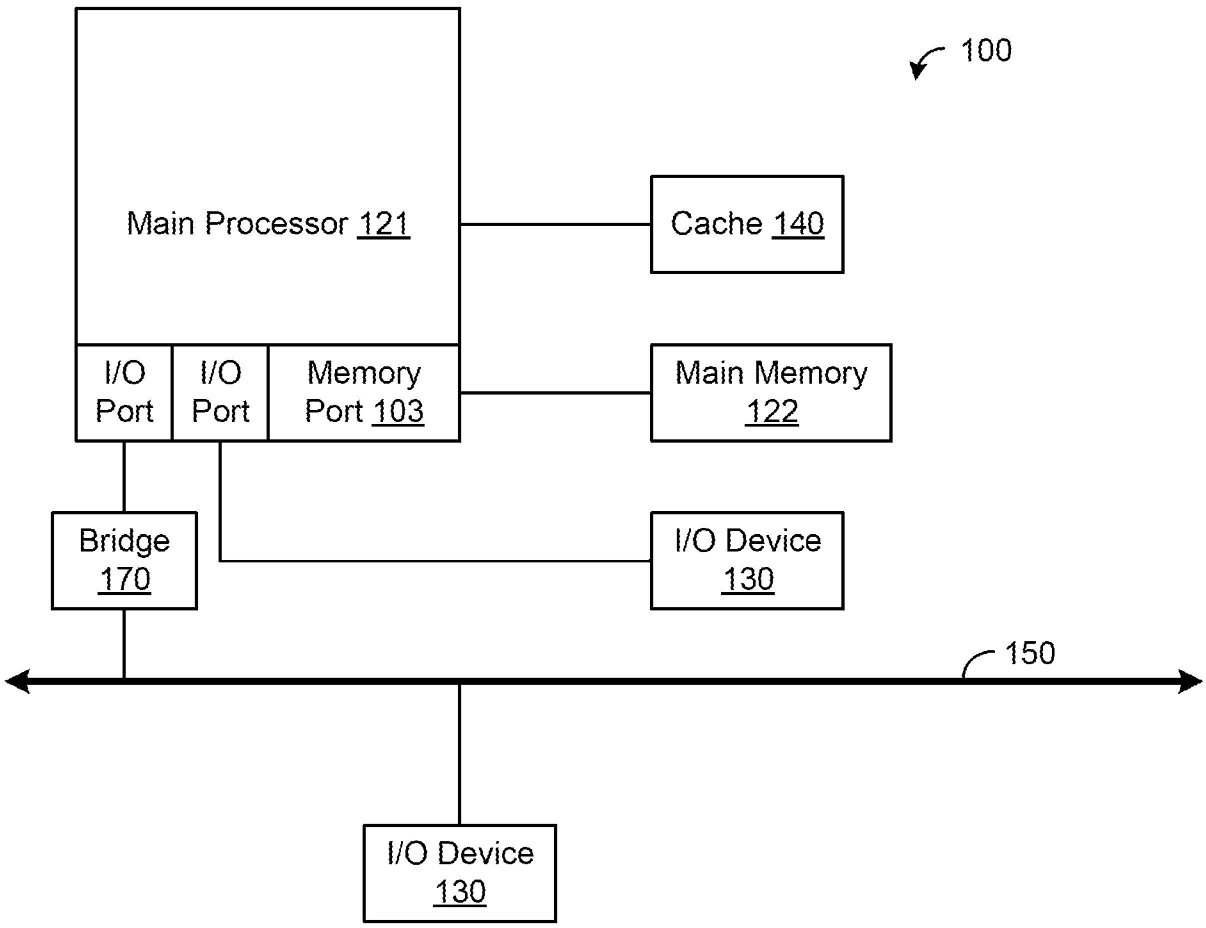
100
Main Processor 121
Cache 140
I/O Port
I/O Port
Memory Port 103
Main Memory 122
Bridge 170
I/O Device 130
150
I/O Device 130

FIG. 1C

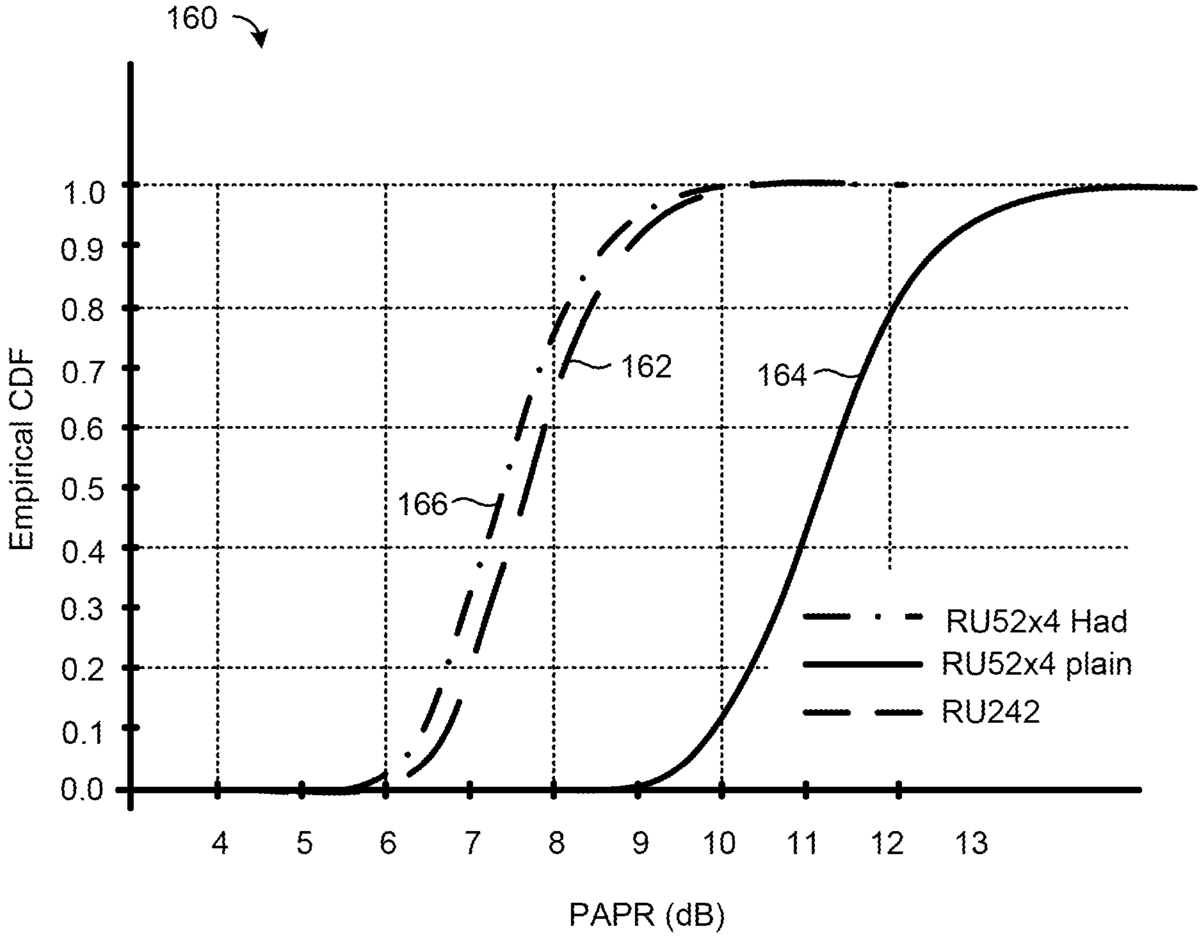
160
1.0
0.9
0.8
0.7
0.6
0.5
0.4
0.3
0.2
0.1
0.0
Empirical CDF
4
5
6
7
8
9
10
11
12
13
PAPR (dB)
162
164
166
RU52x4 Had
RU52x4 plain
RU242

FIG. 1D

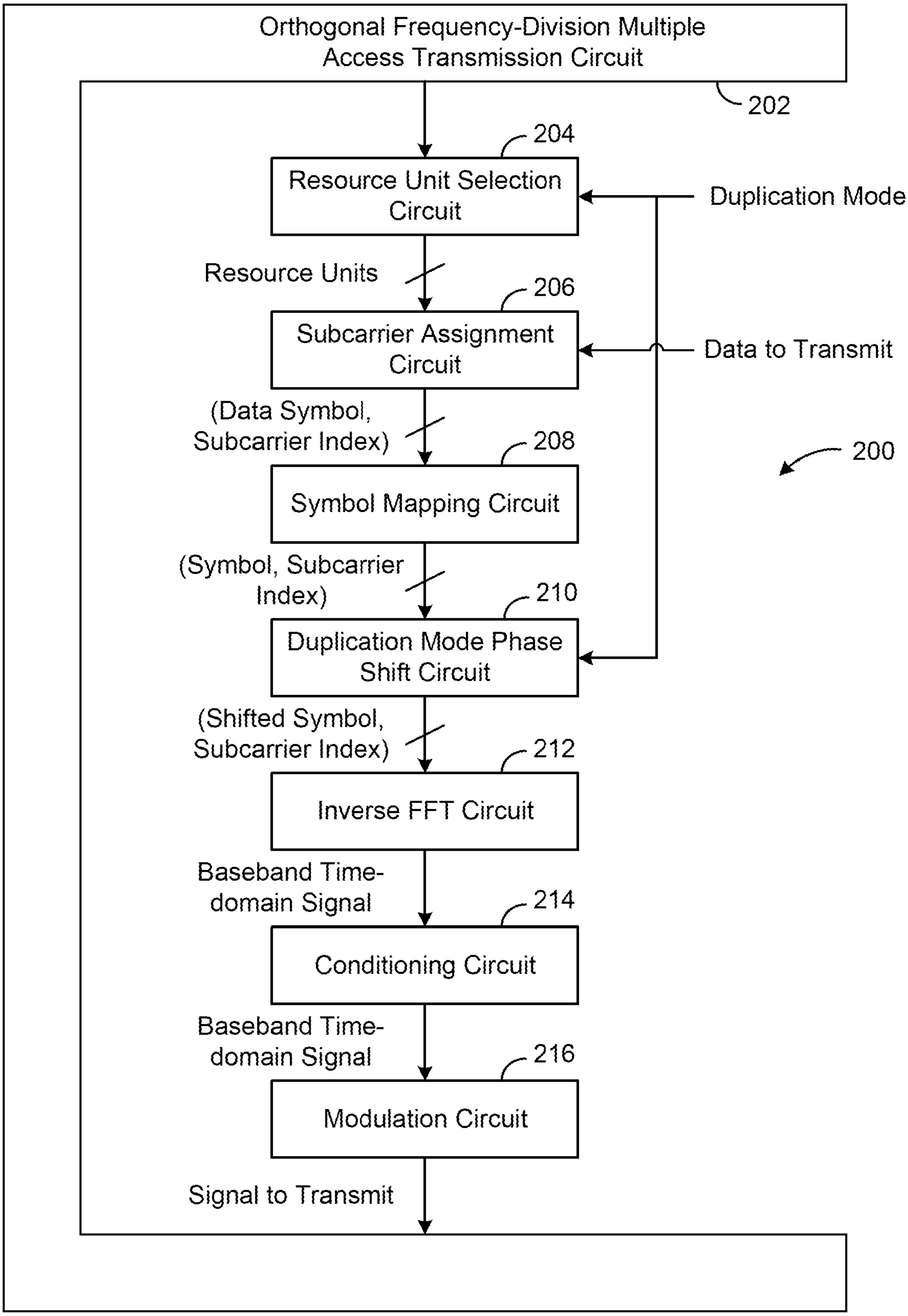
Orthogonal Frequency-Division Multiple Access Transmission Circuit
202
204
Resource Unit Selection Circuit
Duplication Mode
Resource Units
206
Subcarrier Assignment Circuit
Data to Transmit
(Data Symbol, Subcarrier Index)
208
Symbol Mapping Circuit
200
(Symbol, Subcarrier Index)
210
Duplication Mode Phase Shift Circuit
(Shifted Symbol, Subcarrier Index)
212
Inverse FFT Circuit
Baseband Time-domain Signal
214
Conditioning Circuit
Baseband Time-domain Signal
216
Modulation Circuit
Signal to Transmit

FIG. 2A

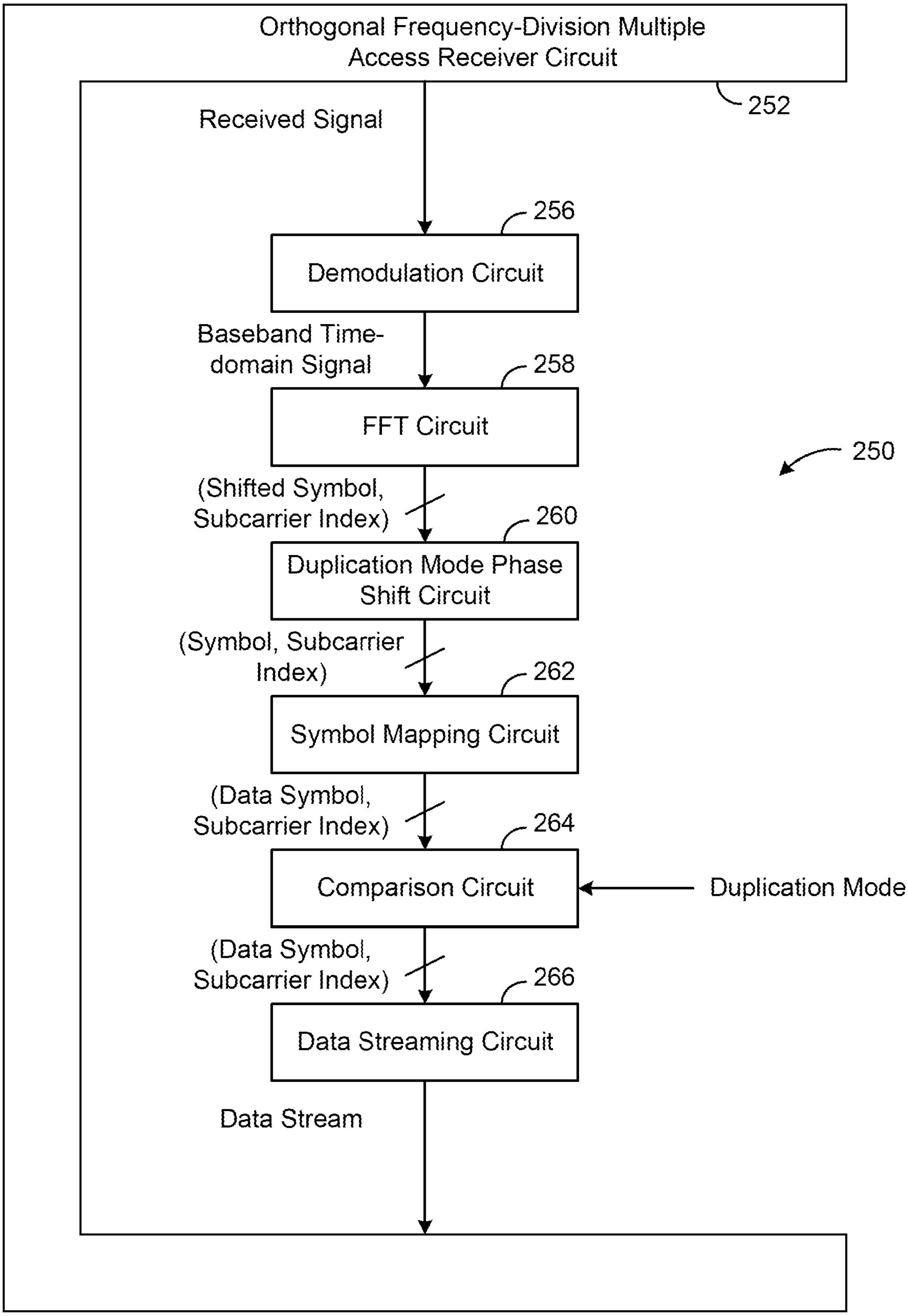
Orthogonal Frequency-Division Multiple Access Receiver Circuit
252
Received Signal
256
Demodulation Circuit
Baseband Time-domain Signal
258
FFT Circuit
250
(Shifted Symbol, Subcarrier Index)
260
Duplication Mode Phase Shift Circuit
(Symbol, Subcarrier Index)
262
Symbol Mapping Circuit
(Data Symbol, Subcarrier Index)
264
Comparison Circuit
Duplication Mode
(Data Symbol, Subcarrier Index)
266
Data Streaming Circuit
Data Stream

FIG. 2B

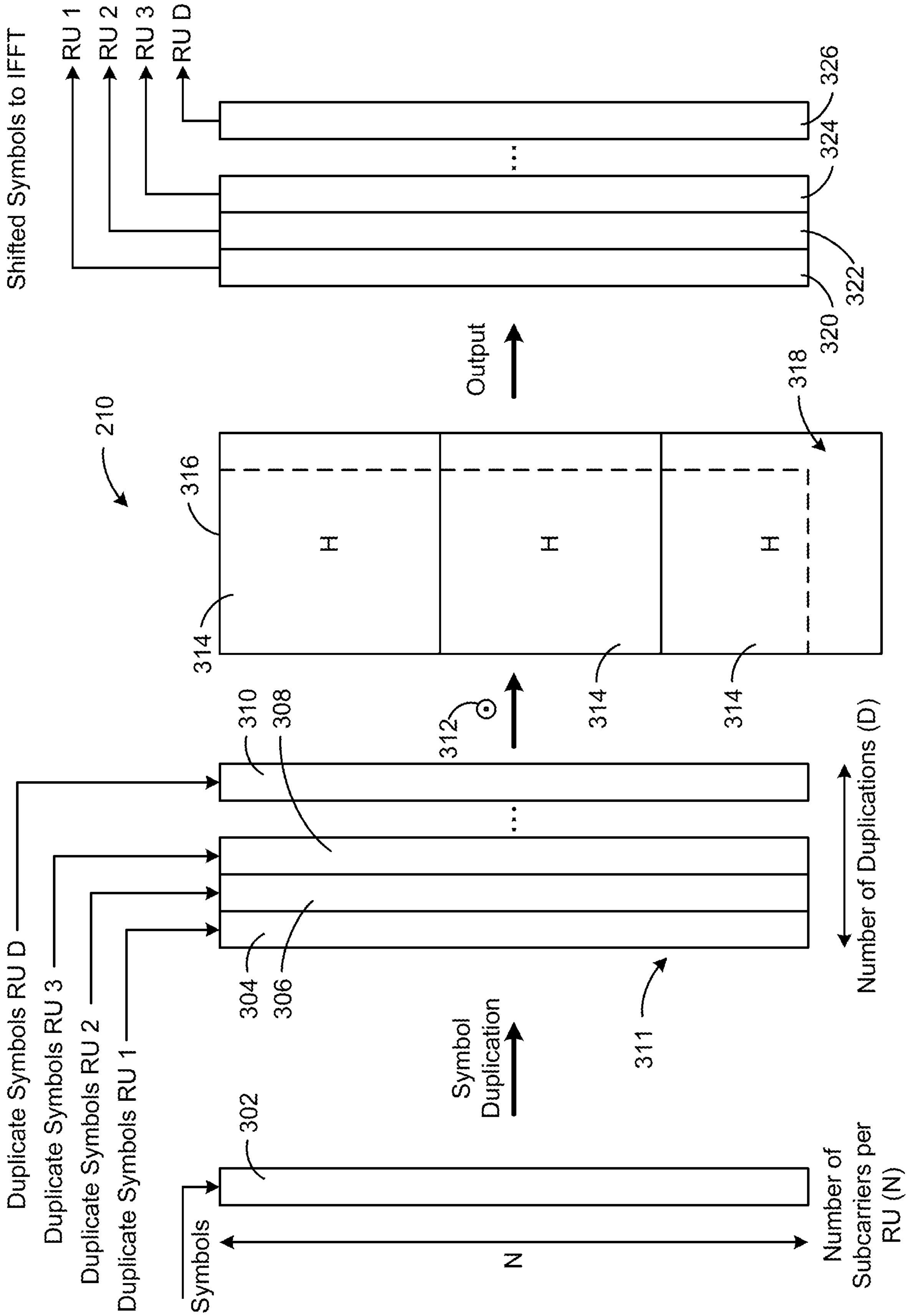
Shifted Symbols to IFFT
RU 1
RU 2
RU 3
RU D
326
324
322
320
210
316
318
314
H
H
H
Output
314
314
310
308
312
⊙
Duplicate Symbols RU D
Duplicate Symbols RU 3
Duplicate Symbols RU 2
Duplicate Symbols RU 1
304
306
311
Number of Duplications (D)
Symbol Duplication
302
Symbols
N
Number of Subcarriers per RU (N)

FIG. 3A

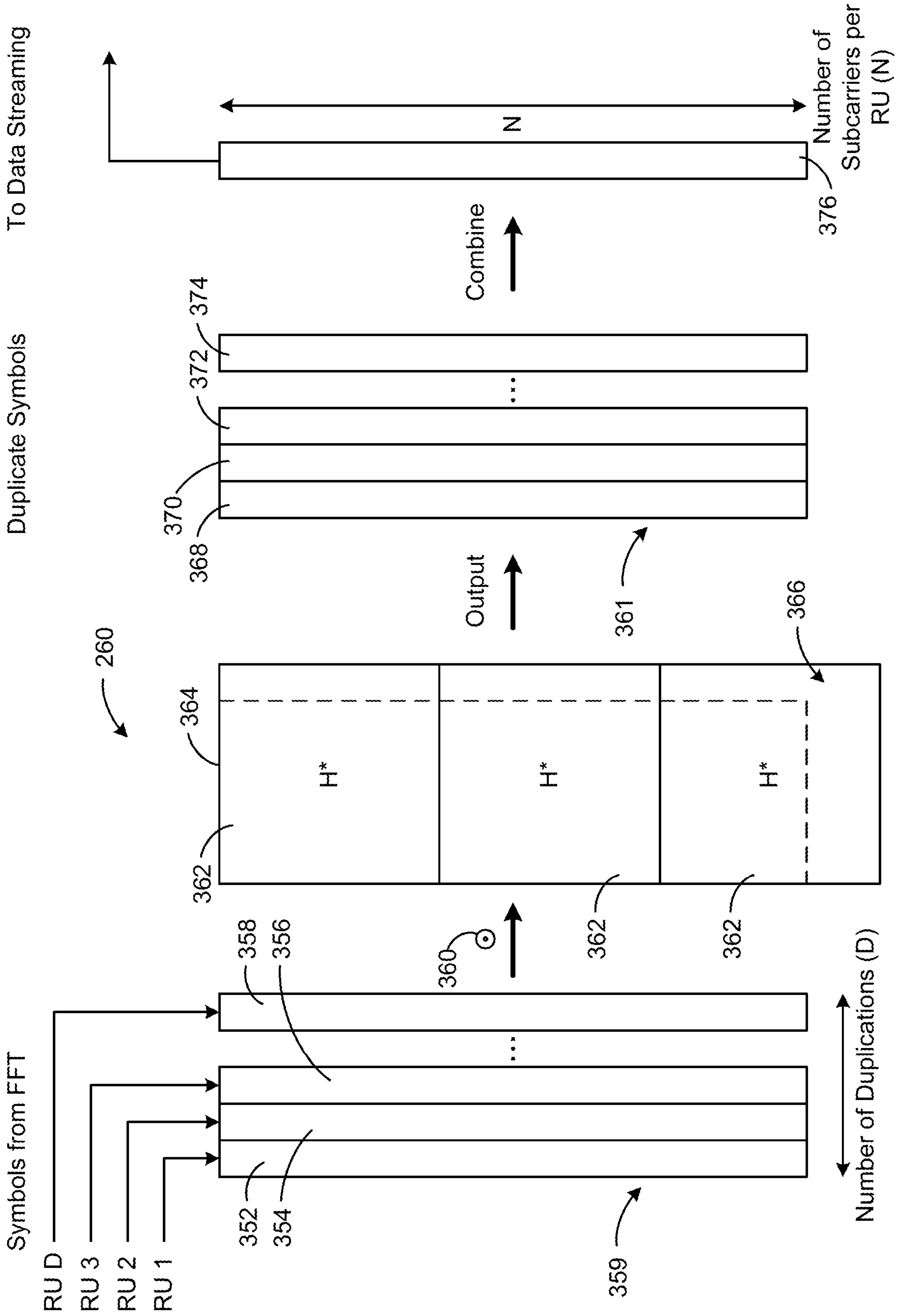
Symbols from FFT
RU D
RU 3
RU 2
RU 1
352
354
356
358
359
Number of Duplications (D)
360
362
364
366
H*
H*
H*
260
Output
361
368
370
372
374
Duplicate Symbols
Combine
N
376
Number of Subcarriers per RU (N)
To Data Streaming

FIG. 3B

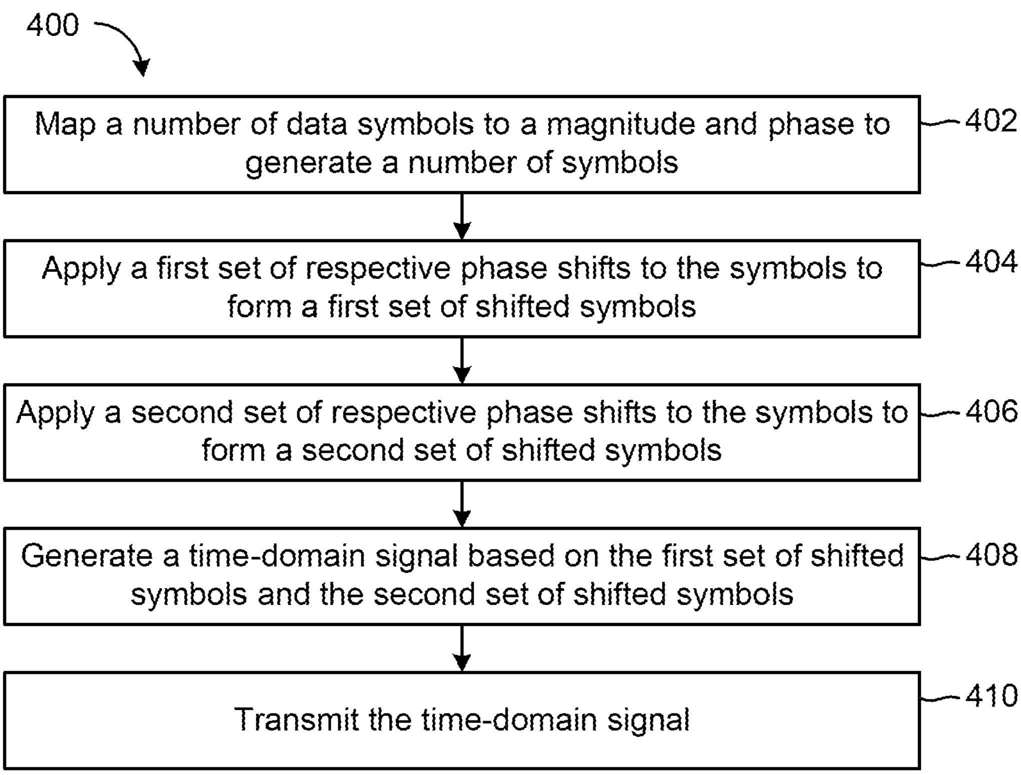
400
Map a number of data symbols to a magnitude and phase to generate a number of symbols
402
Apply a first set of respective phase shifts to the symbols to form a first set of shifted symbols
404
Apply a second set of respective phase shifts to the symbols to form a second set of shifted symbols
406
Generate a time-domain signal based on the first set of shifted symbols and the second set of shifted symbols
408
Transmit the time-domain signal
410

FIG. 4A

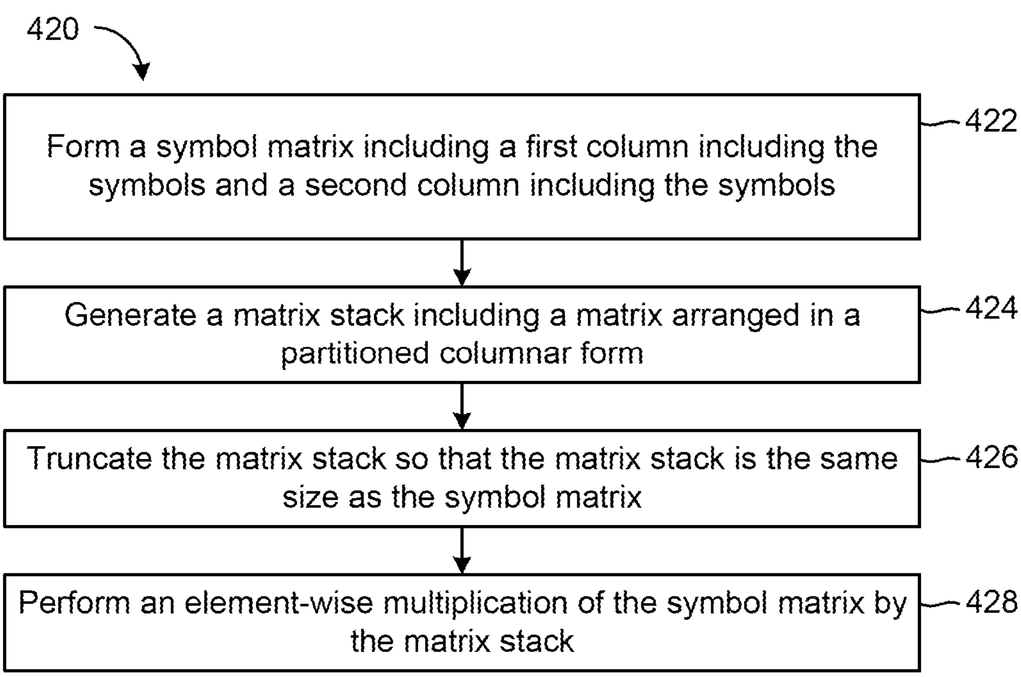
420
Form a symbol matrix including a first column including the symbols and a second column including the symbols
422
Generate a matrix stack including a matrix arranged in a partitioned columnar form
424
Truncate the matrix stack so that the matrix stack is the same size as the symbol matrix
426
Perform an element-wise multiplication of the symbol matrix by the matrix stack
428

FIG. 4B

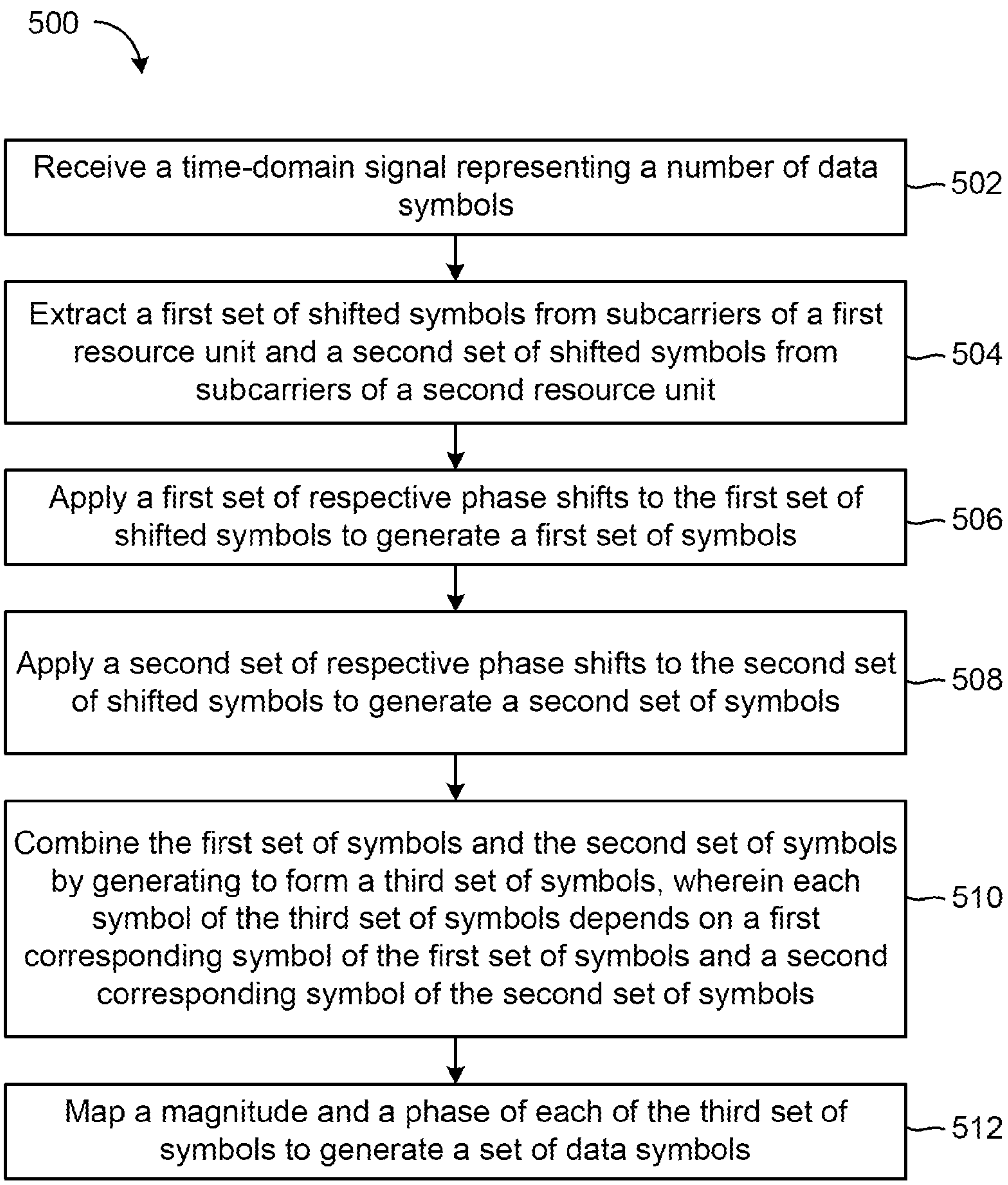
500
Receive a time-domain signal representing a number of data symbols
502
Extract a first set of shifted symbols from subcarriers of a first resource unit and a second set of shifted symbols from subcarriers of a second resource unit
504
Apply a first set of respective phase shifts to the first set of shifted symbols to generate a first set of symbols
506
Apply a second set of respective phase shifts to the second set of shifted symbols to generate a second set of symbols
508
Combine the first set of symbols and the second set of symbols by generating to form a third set of symbols, wherein each symbol of the third set of symbols depends on a first corresponding symbol of the first set of symbols and a second corresponding symbol of the second set of symbols
510
Map a magnitude and a phase of each of the third set of symbols to generate a set of data symbols
512

FIG. 5

Europäisches Patentamt
European Patent Office
Office européen des brevets

# EUROPEAN SEARCH REPORT

Application Number
EP 25 17 4910

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 183 895 B1 (LG ELECTRONICS INC [KR]) 6 November 2013 (2013-11-06)<br>* paragraph [0053] - paragraph [0054] *<br>* paragraph [0011] - paragraph [0012] *<br>----- | 1-15 | INV.<br>H04L27/26 |
| A | SIGURD SCHELSTRAETE (QUANTENNA/ON SEMICONDUCTOR): "Minutes 802.11 be PHY ad hoc Telephone Conferences, September - November 2020",<br>IEEE DRAFT; 11-20-1499-10-00BE-MINUTES-802-11-BE-PHY-AD-HOC-TELEPHONE-CONFERENCES-SEPTEMBER-NOVEMBER-2020, IEEE-SA MENTOR, PISCATAWAY, NJ USA<br>,<br>vol. 802.11 EHT; 802.11be, no. 10<br>23 October 2020 (2020-10-23), pages 1-66, XP068173979,<br>Retrieved from the Internet:<br>URL:https://mentor.ieee.org/802.11/dcn/20/11-20-1499-10-00be-minutes-802-11-be-phy-ad-hoc-telephone-conferences-september-november-2020.docx<br>[retrieved on 2020-10-23]<br>* page 18 *<br>----- | 6,8,12 | |
| | | | TECHNICAL FIELDS SEARCHED (IPC) |
| | | | H04L |

The present search report has been drawn up for all claims

1

| Place of search | Date of completion of the search | Examiner |
|---|---|---|
| Berlin | 18 September 2025 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 17 4910

This annex lists the patent family members relating to the patent documents cited in the above-mentioned European search report. The members are as contained in the European Patent Office EDP file on
The European Patent Office is in no way liable for these particulars which are merely given for the purpose of information.

18-09-2025

| Patent document cited in search report | Publication date | Patent family member(s) | Publication date |
|---|---|---|---|
| EP 2183895 B1 | 06-11-2013 | EP 2183895 A2 | 12-05-2010 |
| | | KR 20090024047 A | 06-03-2009 |
| | | US RE45902 E | 23-02-2016 |
| | | US 2010239046 A1 | 23-09-2010 |
| | | WO 2009031801 A2 | 12-03-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63644190
- US 63669053